Europäisches Patentamt

European Patent Office

Office européen des brevets

(11) Veröffentlichungsnummer: **0 301 555 B1**

(12) **EUROPÄISCHE PATENTSCHRIFT**

(45) Veröffentlichungstag der Patentschrift: **04.11.92**

(21) Anmeldenummer: **88112269.1**

(22) Anmeldetag: **28.07.88**

(51) Int. Cl.⁵: **C03C 25/00**

(54) **Färbeverfahren für Kieselsäureglasfasern und so erhältliche Ware.**

(30) Priorität: **31.07.87 DE 3725505**

(43) Veröffentlichungstag der Anmeldung:
**01.02.89 Patentblatt  89/05**

(45) Bekanntmachung des Hinweises auf die
Patenterteilung:
**04.11.92 Patentblatt  92/45**

(84) Benannte Vertragsstaaten:
**AT BE CH DE ES FR GB IT LI LU NL SE**

(56) Entgegenhaltungen:
**EP-A- 0 236 735**
**DE-C- 738 145**
**US-A- 3 617 162**

**CHEMICAL ABSTRACTS, Band 85, Nr. 12, 20.**
**September 1976, Seite 91, Ref.Nr. 79591e,**
**Columbus, Ohio, US; & JP-A-76 53 077**
**(TOYOBA CO. LTD) 11-05-1976**

(73) Patentinhaber: **Frenzelit Werke GmbH & Co.**
**KG**
**Frankenhammer/Postfach 1140**
**W-8582 Bad Berneck(DE)**

(72) Erfinder: **Schmidt, Ulrich, Dr. Dipl.-Chem.**
**Sterntalerring 116**
**W-8580 Bayreuth(DE)**
Erfinder: **Schnabel, Manfred, Dipl.-Ing. (FH)**
**Weberstrasse 22**
**W-8653 Mainleus(DE)**
Erfinder: **Füssmann, Klaus**
**Seidelsberg 2**
**W-8656 Thurnau(DE)**
Erfinder: **Kaiser, Bernd**
**Altstadt 1**
**W-8670 Hof/Saale(DE)**

(74) Vertreter: **Müller-Boré & Partner Patentanwäl-**
**te**
**Isartorplatz 6 Postfach 26 02 47**
**W-8000 München 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Bisher wurden Glasfasern mit Pigmentfarbstoffen und Binder angefärbt, da das Glas keine Farbstoffaffinität aufweist. Es besteht aber ein Bedarf an eingefärbten Glasfasern ohne Zusatz von organischem Material, um Glasfasererzeugnisse zu erzielen, die nach dem Erhitzen keine toxischen Gase entwickeln und tatsächlich unbrennbare Dekortextilien sowie Glasfasern oder Glasfasermatten für die Anwendung im Bautenschutz zu erzielen.

Aus diesem Grunde gab es schon Versuche, Glasfaser direkt anzufärben.

Aus der DE-C-738 145 ist ein Färbeverfahren für Glasfasern bekannt, bei dem vor der Färbung mit vorzugsweise basischen Farbstoffen eine Säurebeizung erfolgt. Unter den vorgeschlagenen Bedingungen (2 - 6 % HF, gefolgt von 0,5 % geschwefelten Phenols) tritt eine höhere Extraktion als von 2 % max. auf.

Gemäß US-A-3 617 162 färbt man Glasfasern mit basischen Acrylfarben, nachdem man sie in schwefelsaurer Chromatlösung gebeizt hat. Diese Beizung führt jedoch zu Auswaschgraden von rund 10 %, die bereits einen Festigkeitsabfall der Faser mit sich bringen.

Aus der EP-A-234 735 (publ. 16.09.87) ist eine Glasfaser mit verbesserter Temperaturbeständigkeit bekannt, wobei die zu 1 bis 30 Gew.-% von säurelöslichen Bestandteilen befreite Faser neben ggfs. einem färbenden Überzug einen beständigen, feuchtigkeits- und wasserdampfdichten dünnen, elastischen Überzug sowie einen Restwassergehalt von 5 bis 10 Gew.-%, vorzugsweise 5 bis 7 Gew.-%, aufweist.

Sie wird hergestellt, indem eine Faser-Säuremischung langsam innerhalb einer Zeitspanne von 1/2 bis 3 Stunden auf Temperaturen im Bereich von 50°C bis dicht unterhalb des Siedepunktes der Säure erhitzt, bei dieser Temperatur gehalten und anschließend langsam auf Umgebungstemperatur abgekühlt wird, wobei Temperatursprünge im Bereich über 50°C sowohl beim Aufheizen wie biem Abkühlen vermieden werden und zur Erzielung eines Auslaugungsgrades von mindestens 1 Gew.-% bis höchstens 30 Gew.-% des ursprünglichen Fasergewichtes die Behandlung ggfs. unter Druck durchgeführt wird und die so extrahierte Glasfaser nach dem Auswaschen der Säurereste, ggfs. unter Zusatz von Basen und ggfs. nach Aufbringen einer Kennfärbung mit einer zu einem wasserdampfdichten Film trocknenden Schicht versehen wird.

Die US-PS 2 582 919 beschreibt eine Säurebehandlung von Glasfasern, wobei bis zu 25 % des Ausgangsgewichtes, vorzugsweise etwa 10 % des Ausgangsgewichtes extrahiert werden, um Poren in der Oberfläche der Glasfasern zu erzielen, die selbst dadurch negativ aufgeladen werden, wodurch positiv geladene Farbstoffionen wie diejenigen von basischen Farbstoffen, direkt aufgezogen werden können. Organische oder anorganische Pigmente können durch Tauchen in den Poren abgeschieden werden. Auch farbige Salze können auf den Glasfasern abgeschieden werden. Zum Verschluß der Poren dienen Kunststoffe, die in Lösung auf den Fasern abgeschieden werden oder in Monomerform eingebracht und in situ polymerisiert werden. Dabei kann der Farbstoff im Kunststoff gelöst sein. Um die Poren zu schließen, können die Fasern auch auf etwa 600°C bis 800°C erhitzt werden. Da sich bei der Säurebehandlung ein starker Festigkeitsabfall ergibt, werden Fasern mit hydratisierten Oxidsolen, insbesondere Aluminiumoxidsol, behandelt. Die zuletzt genannten Glasfasern, bei denen die Farbstoffverbindung mittels Kunststoff erfolgt, haben die eingangs erwähnten Nachteile, dao die erheblichen Kunststoffmengen abbrennen können. Wenn der Porenverschluß nur durch Erhitzen erfolgt, sind die Fasern jedenfalls vollkommen trocken und hätten bei den hohen Extraktionsgraden von ca. 10 % keine hinreichende Festigkeit, um anschließend noch auf normalen Textilmaschinen, wie sie in der Weiterverarbeitung von Glasfasern üblich sind, verarbeitet zu werden. Deswegen ist diese Arbeitsweise nur für Glasfasererzeugnisse, im wesentlichen nur für schon hergestellte Textilien anwendbar. Dies gilt auch für eine ähnliche Arbeitsweise der FR-PS 1 420 107, wo bei Glasfasererzeugnissen 5 bis 25 % des Fasergewichtes ausgelaugt und Metallsalze zum Färben verwendet werden, wobei anschließend eine Harzbehandlung oder eine thermische Behandlung erfolgen kann.

Aufgabe der Erfindung ist es daher, ein Färbeverfahren für Kieselsäureglasfasern oder daraus hergestellten Textilien mit organischen Farbstoffen durch Säurebehandlung des, ggfs. entschlichteten Glases, Färbung und ggfs. anschließendem Aufbringen einer, vorzugsweise wasserdampfdichten, Appretur sowie nach diesem Verfahren erhältliche Produkte zur Verfügung zu stellen, die die Nachteile des obengenannten Standes der Technik vermeiden.

Diese Aufgaben werden durch die kennzeichnenden Merkmale der Ansprüche 1 bzw. 8 gelöst.

Die Unteransprüche bilden die Erfindung weiter.

Es wurde nun gefunden, daß ein relativ geringer Auslaugungsgrad von 0,1 bis 2, insb. 1/4 bis 1 %, vorzugsweise ca. 1/2 % genügt, um die Faser hinreichend anionisch zu machen, daß sie kationische Farbstoffe und insbesondere basische Acrylfarbstoffe mit einem K-Wert ≤ 3,5 gut und lichtecht aufnehmen. Die entstandene Färbung ist auf eine echte Affinität zwischen der Faser und dem eingesetzten Farbstoff zurückzuführen.

Die erzielten Wasch- und Lichtechtheiten entsprechen fast den bei der Polyacrylnitrilfärberei mit diesen Farbstoffen erzielten Echtheiten. Die Farbstoffapplikation erfolgt vorzugsweise im Ausziehverfahren in einem stark sauren pH-Bereich von 0 bis 3, insbes. 0 bis 2, wenn bei zweistufiger Arbeitsweise für das Färben nach Zwischentrocknung die gleiche Flotte wie für das Beizen verwendet wird, lediglich unter Zusatz der für die Färbung erforderlichen Farbstoffe und Hilfsmittel. In diesem pH-Bereich baut sich die Affinität zwischen Fasern und Farbstoff erst allmählich auf, was in der Wirkung dem Einsatz eines Retarders gleichkommt.

Wird jedoch zweistufig und zweibadig gearbeitet, also die Färbung in einem anderen Bad als die Beizung vorgenommen, so erfolgt die Färbung bei dem vom Farbstoffhersteller empfohlenen pH-Wert, insbesondere bei einem pH-Wert der einer wässrigen Essigsäure von 0,5 bis 2 g/l entspricht, was für die fertige Farbflotte etwa ein pH von 2 - 5, insbesondere 3 - 4, bedeutet.

Das Flottenverhältnis beträgt vorzugsweise bei der Färbung von Flocke und Garn ca. 1:5 und bei der Stückfärberei ca. 1:5 bis 1:10.

Als Hilfsmittel werden dem Färbebad neben der Säure zum Einstellen des pH-Wertes, die insbes. eine anorganische Säure, vorzugsweise Salpetersäure ist, aber auch z.B. Essigsäure sein kann, ein Netzmittel, z.B. ein Polyoxyethylenglykol und ein flüsiges Polyphosphat für die Textilveredelung als Komplexbildner, z.B. mit Polycarbonsäure stabilisiertes anionenaktives Polyphosphat zugesetzt.

Die Färbung kann in der Kälte erfolgen, dauert dann jedoch ca. 1 Tag (18-24 h). Es ist daher vorteilhaft, unter Erhitzen zu färben. Bei einer üblichen HT-Färbeapparatur mit 2000 1 Flotteninhalt wird nach Einsetzen der Materialträger das Bad innerhalb von ca. 15 bis 60 min von Umgebungstemperatur auf ca. 50°C bis dicht unter den Siedepunkt des Bades aufgeheizt, ca. 30 bis 120 min bei dieser Temperatur belassen und dann innerhalb von 15 bis 60 min wieder auf Umgebungstemperatur abgekühlt, wobei man beim Abkühlen gewöhnlich eine indirekte Kühlung zur Unterstützung anwendet. Nachträglich kann eine Schlichte aufgebracht werden. Bei dem geringen Auswaschgrad von ca. 1/2 %, der bevorzugt ist, tritt kein großer Festigkeitsabfall der Glasfaser ein, so daß die bei stärkeren Auslaugungen wesentliche Maßnahme, einen Feuchtigkeitsgehalt von 5 bis 10 % in der Faser aufrechtzuerhalten, indem man einen wasserdampfdichten Überzug auf die Faser aufbringt, bevor sie ganz getrocknet ist, hier entfallen kann, aber ein gewisser Restwassergehalt natürlich bevorzugt ist und die Weiterverarbeitbarkeit der Glasfaser verbessert. Im vorliegenden Falls ist es vorteilhaft, einen Restwassergehalt von 0,5 - 3 Gew.-%, insbesondere ca. 1 - 2% in der Faser durch Aufbringen eines wasserdampfdichten Überzugs auf die noch nasse Faser aufrecht zu erhalten. Dies beseitigt auch die Bildung von Glasstaub bei der Weiterverarbeitung, z. B. auf Textilmaschinen.

Vorzugsweise beträgt die Aufheizzeit, bei der man wegen der Erwärmung des Bades beim Einmischen der Säure meist von ca. 30°C ausgeht, 20 bis 50 min, insbes. 30 - 40 min, die Haltezeit beträgt 45 bis 90 min bei 60 bis 90°C, insbes. ca. 60 min bei ca. 80°C und die Abkühlzeit 15 bis 30 min, um auf 50°C bis 25°C zurückzukommen.

Man kann das Verfahren einbadig, aber zweistufig durchführen, aber selbstverständlich auch für Säureauslaugung und Färbung zwei getrennte Bäder verwenden und die Ware vom Säureauslaugbad, ggfs. nach Waschen zur Entfernung einer für die Färbung störenden übermäßigen Säuremenge dem Färbebad zuführen. Bei beiden Arbeitsweisen wird, nach der Säureextraktion die Ware aus dem Bad genommen, ggfs. gepresst oder zentrifugiert oder auf sonstige Weise vom Hauptteil der Behandlungsflüssigkeit befreit, ggfs. zur Entfernung von Säure gewaschen und neutralisiert und dann getrocknet. Der Einsatz der zwischengetrockneten Ware für das darauffolgende Färben bewirkt offenbar eine erheblich höhere Affinität der Ware für den Farbstoff, da der Farbstoff wesentlich besser aufzieht, was nicht nur eine stärkere Färbung sondern auch eine bessere Erschöpfung des Färbebades ergibt. Auf diese Weise kann man Säure sparen und die Abwasseraufbereitung entlasten und die Ware zwischenlagern z.B. für verschiedene Färbungen. Die Aufheiz- und Abkühlzeiten für beide Stufen bleiben insbes. in dem oben als bevorzugt angegebenen Bereich. Die Haltezeit bei der Beiz- und Färbetemperatur, vorzugsweise ca. 80°C, wird in etwa geteilt, so daß ca. 20 bis 45 min, insbesondere ca. 30 min bei der erhöhten Beiztemperatur und etwa ebenso lange bei der erhöhten Färbetemperatur gehalten wird.

Führt man das Verfahren einbadig, aber zweistufig durch, so gibt man zu Beginn des Aufheizens sämtliche Hilfsmittel zu, und erst, wenn das Färbebad die gewünschte Behandlungstemperatur aufgeheizt ist, also bei erreichter Färbetemperatur, den Farbstoff. Falls der Farbstoff säureempfindlich ist, wird dann bei Zugabe des Farbstoffs abgepuffert, vorzugsweise auf pH 3.

Nach Beendigung des Färbeprogramms wird in üblicher Weise gespült, neutralisiert und anschließend ohne Zwischentrocknung nachbehandelt, z.B. die Appretur oder der wasserdampfdichte Überzug aufgebracht.

Diese Färbungen sind reproduzierbar, dies gilt sowohl für den Einsatz einzelner Farbstoffe wie auch für Farbmischungen.

Befindet sich auf dem zu färbenden Material Schlichte oder irgendeine andere Avivage, so empfiehlt es sich, vor dem Färben zu entschlichten bzw. zu waschen.

Um die Gebrauchseigenschaften der Ware zu verbessern, kommen, wie erwähnt, in der Nachbehandlung der nassen Faser z.B. Polymerdispersionen zur Anwendung, vorzugsweise solche, die einen wasserdampfdichten Überzug bilden. Das Färbeverfahren eignet sich für Flocke, Garn und Gewebe aus Kieselsäureglas, insbes. E-Glasfasern.

Für die praktische Durchführung ist zu erwähnen, daß zwar die Färbung auch in der Kälte erfolgen kann, jedoch werden dann Zeiten bis zu 24 h benötigt. Nach dem angegebenen Färbeverfahren kann man gezielt färben, wobei ein Muster reproduzierbar ist. Beim einbadigen 2-stufigen Verfahren ergeben sich bei pH 0 kräftigere Färbungen als bei pH 2, beim gleichen Farbstoff wird im einen Fall ein kräftiger Farbton erzielt, während bei pH 2 ein Pastellfarbton entsteht. Die erzielten Färbungen sind größenordnungsmäßig einen halben Punkt unter der gleichen Acrylfärbung, also der Färbung von Acrylnitril mit dem gleichen Farbstoff, unter den für die Acrylnitrilfärbung üblichen Bedingungen. Die Lichtechtheit der erzielbaren Glasfaserfärbungen hat häufig einen Wert von 5 oder höher auf der Skala von 1 bis 8 für den Deko-Bereich. Das Verfahren ist nuancierbar und man kann mischfärben oder überfärben. Wenn die erzielte Farbfülle nicht ausreicht, kann man durch weitere Säurezugabe eine tiefere Färbung erzielen, da sich dann das Bad stärker erschöpft.

Ein besonderer Vorteil des Verfahrens gegenüber bekannten Verfahren ist es, daß durch die geringe Auslaugung und somit geringe erforderliche Säurestärke das Bad mehrfach wiederverwendbar ist, wenn Säure und Farbstoff nachgefüllt werden. Die geringe, durch die Auslaugen entstehende Salzmenge stört nicht. Man kann das Bad 6 bis 7mal wiederverwenden, was natürlich aus Umweltschutzgründen stark bevorzugt ist.

Die folgenden Beispiele erläutern die Erfindung.

Beispiel 1

Dieses Beispiel zeigt die Färbung durch Ausziehverfahren auf Garn. Es wurde der Laborfärbeapparat AHIBA Turbocolor benutzt und die Färbung auf der Spule durchgeführt. Das Flottenverhältnis betrug 1 : 5, es wurden 200 g Garn auf 1 Liter Flotte verwendet. Das Garn, EC- 9/136 tex x 1, texturiert, wurde vorher entschlichtet mit 6 % Beisol BT (Enzym zum Entschlichten), 6 % eines Waschmittels (Lavotan DS) und 3 % eines durch Polycarbonsäure stabilisierten Polyphosphats (Heptol NWS). Das Entschlichten wurde schon in der Laborfärbeapparatur durchgeführt, indem innerhalb von 30 min von 30°C auf 95°C aufgeheizt, 30 min bei 95°C gehalten und dann innerhalb von 25 min auf 40°C abgekühlt wurde. Dann wurde als Beizflotte Salpetersäure (52/53 %) in einer Konzentration von 10 g/l und 2 g/l nichtionogener Alkylpolyglykolether (Perenin GNS) eingefüllt. Die Laborfärbeapparatur enthielt zwei Spulen mit je 100 g Garn.

Das Temperaturprogramm war 50 min Aufheizen von 30°C auf 80°C, 30 min Halten bei 80°C und indirekt Kühlen innerhalb von 30 min auf 50°C. Beide Spulen wurden anschließend gespült und neutralisiert (pH 8). Danach wurde eine der beiden Spulen aus der Apparatur entnommen und im Labortrockenschrank bei 110°C getrocknet. Die zweite Spule verblieb in der Zwischenzeit im Spülbad, so daß ein Antrocknen an der Luft vermieden wurde.

Nach dem Trocknen der einen Spule wurden beide Spulen in der Laborfärbeapparatur nach folgender Rezeptur gefärbt:

| 2 g/l | Essigsäure 60 % |
|-------|-----------------|
| 2 g/l | nichtionogener Alkylpolyglykolether (Perenin GNS) |
| 0,1 % | basic blue 41 (Maxilonblau GRL) |
| 0,05 % | basic blue 3 (Maxilonblau 5 G) |

Das Temperaturprogramm war 30 min Aufheizen von 30°C auf 80°C, 30 min Halten bei 80°C und 30 min indirekt Abkühlen auf 50°C. Dann wurde mit Wasser gespült (da Essigsäure beim Färben vorliegt ist keine Neutralisation erforderlich) und mit 10 g/l Pretavyl 9179 spez. (Böhme) unter Zusatz von 1 g/l eines handelsüblichen Waschmittels (Solpon BS) 30 min bei 25°C nachbehandelt und dann die beiden Glasseidenspulen aus dem Bad gezogen und im Labortrockenschrank bei 130°C getrocknet und gleichzeitig kondensiert. Bei der Beurteilung der Farbtiefe konnte festgestellt werden, daß die zwischengetrocknete Spule eine ca. 3 mal tiefere Färbung aufwies.

Beispiel 2 (Betriebsversuch entsprechend Beispiel 1)

Ca. 400 kg texturiertes Textilglasfilamentgarn EC-9/230 tex x 1 auf 216 Färbespulen wurden auf einem Materialträger für einen Kreuzspulfärbeapparat aufgestockt. Das Material wurde im Apparat folgender Behandlung unterzogen:

Beizbad:

10 g/lSalpetersäure 52/53 %
2 g/l nichtionogener Alkylpolyglykolether (Perenin GNS)

Temperaturprogramm:

In 50 min Aufheizen von 30°C auf 80°C, 30 min Halten bei 80°C und indirekt Kühlen in 30 min auf 50°C.

Spülen und Neuralisieren mit Ammoniak (pH 8)

Der Materialträger wurde nun vom Färbeapparat in den Schnelltrockner überführt und das Material bei 110°C getrocknet.

Das nach diesem Verfahren behandelte Garn ist nach dem Trocknen über längere Zeit lagerfähig. Aus dem Garn der oben beschriebenen Partie wurden im Labor Farbeinstellungen auf der Trendfarbenkarte 1988/89 für Heimtextilien "Trend und Styling" von Bayer (Geschäftsbereich Fasern) vorgenommen. Aus den im Labor erarbeiteten Rezepten wurden 4 Partien a 50 kg gefärbt.

| Farbrezepturen: | |
| --- | --- |
| Farbe Nr. 5 grünbeige | |
| Maxilongoldgelb GL 200 % | 0,044 % |
| Maxilonrot GRL-BR 180 % | 0,0037 % |
| Maxilonblau TRL 200 % | 0,016 % |
| Farbe Nr. 6 hellbeige | |
| Maxilongoldgelb GL 200 % | 0,009 % |
| Maxilonrot GRL-BR 180 % | 0,0004 % |
| Maxilonblau TRL 200 % | 0,0002 % |
| Farbe Nr. 35 mittelbraun | |
| Maxilongoldgelb GL 200 % | 0,35 % |
| Maxilonrot GRL-BR 180 % | 0,077 % |
| Maxilonblau TRL 200 % | 0,035 % |
| Farbe Nr. 36 fraise | |
| Maxilongoldgelb GL 200 % | 0,0113 % |
| Maxilonrot GRL-BR 180 % | 0,0052 % |
| Maxilonblau TRL 200 % | 0,0032 % |

Die Färbung und die Nachbehandlung erfolgte mit den gleichen Chemikalien, Hilfsmitteln und den gleichen Temperaturprogrammen wie in Beispiel 6 beschrieben.

Die derart gefärbten Fasern eignen sich gut zum Verweben für feuerfeste Dekorationsstoffe, z.B. Vorhänge.

Das säuregebeizte und getrocknete Material kann, wie schon erwähnt, ohne weiteres, vor dem Färben zwischengelagert werden. Es hat sich gezeigt, daß auch nach ca. 6 Monaten Lagerzeit in einem trockenen Raum beim Garn noch die gleiche Affinität zum basischen Farbstoff vorliegt wie unmittelbar nach dem Zwischentrocknen. Der Zutritt von Wasser zum Garn vermindert jedoch diese zusätzlich gewonnene Affinität und hebt sie schließlich fast ganz auf.

**Patentansprüche**

1. Färbeverfahren für Kieselsäureglasfasern oder daraus hergestellten Textilien mit organischen Farbstoffen durch Säurebehandlung des, ggfs. entschlichteten Glases, Färbung und ggfs. anschließendem Aufbringen einer, vorzugsweise wasserdampfdichten, Appretur, dadurch **gekennzeichnet,** daß die Säurebehandlung bis zu einem Extraktionsgrad von 0,1 bis höchstens 2 %, vorzugsweise von 1 %, durchgeführt, und nach Zwischentrocknung, ggfs. nach trockener Zwischenlagerung, die Färbung mit basischen Acrylfarbstoffen mit einem K-Wert von ≤ 3,5 und hoher Lichtechtheit bei einem pH-Bereich von 0 bis 5 ggfs. unter Zusatz von Netzmittel und Komplexbildner bei einem Flottenverhältnis von 1:4 bis 1:15 bei einer Temperatur von Umgebungstemperatur bis 130°C erfolgt und nach der Färbung in üblicher Weise gespült, ggfs. neutralisiert und anschließend nachbehandelt wird.

2. Verfahren nach Anspruch 1, dadurch gekennzeichnet, daß dann, wenn die Färbung in einem anderen Bad als die Beizung vorgenommen wird, sie bei einem pH-Wert, der einer wässrigen Essigsäure von 0,5 bis 2 g/l entspricht, durchgeführt wird.

3. Verfahren nach Anspruch 1 oder 2, dadurch gekennzeichnet, daß die Färbung in einem Bad erfolgt, das kontinuierlich von Umgebungstemperatur innerhalb von 15 bis 60 min auf 50°C bis dicht unter den Siedepunkt erhitzt, 30 bis 120 min bei dieser Temperatur gehalten und dann innerhalb von 15 bis 60 min auf Umgebungstemperatur abgekühlt wird.

4. Verfahren nach Anspruch 3, dadurch gekennzeichnet, daß kontinuierlich von Raumtemperatur innerhalb von ca. 20 bis 50 min auf 60 bis 80°C erwärmt wird, etwa 45 bis 90 min bei dieser Temperatur gehalten wird und dann innerhalb von 15 bis 30 min auf 25 bis 50°C abgekühlt wird.

5. Verfahren nach einem der Ansprüche 1 bis 4, dadurch gekennzeichnet, daß bei einbadiger, zweistufiger Verfahrensführung am Anfang sämtliche Hilfsmittel und nach Erreichung der Färbetemperatur der Farbstoff, ggfs. nach geeignetem Abpuffern der Flotte, zugesetzt wird.

6. Verfahren nach einem der Ansprüche 1 bis 5, dadurch gekennzeichnet, daß bei Verwendung säureempfindlicher Farbstoffe die Flotte vor Zugabe des Farbstoffes auf pH 3 - 4 zurückgepuffert und/oder als Säure jedenfalls bei der Färbung Essigsäure verwendet wird.

7. Verfahren nach einem der vorhergehenden Ansprüche, dadurch gekennzeichnet, daß nach der Säurebehandlung die extrahierte Ware weitgehend säurefrei gewaschen, ggfs. neutralisiert und dann getrocknet und dann, ggfs. nach Zwischenlagerung, in das Färbebad eingebracht wird.

8. Verfahren nach einem der vorhergehenden Ansprüche, dadurch gekennzeichnet, daß zur Nachbehandlung vernetzungsfähige oder polymerisierfähige Polymere oder Vorpolymere zur Anwendung kommen, welche einen wasserdampfdichten Überzug auf der Faser bilden und in der Faser ein bleibender Restwassergehalt von 0,5 bis 10 %, insbesondere 0,5 bis 3 %, verbleibt.

9. Kieselsäureglasfasern oder daraus hergestellte Textilien, die säurebehandelt, mit organischen Farbstoffen angefärbt und ggfs. appretiert oder mit einem wasserdampfdichten Überzug versehen sind, dadurch gekennzeichnet, daß sie erhältlich sind, indem die Säurebehandlung, ggfs. nach Entschlichten, bis zu einem Extraktionsgrad von 0,1 bis höchstens 2 %, vorzugsweise von 1 %, durchführt und, nach Zwischentrocknen ggfs. nach trockener Zwischenlagerung, die Färbung mit basischen Acrylfarbstoffen mit einem K-Wert von ≤ 3,5 und hoher Lichtechtheit bei einem pH-Bereich von 0 bis 5, ggfs. unter Zusatz von Netzmittel und Komplexbildner bei einem Flottenverhältnis von 1:4 bis 1:15 bei einer Temperatur von Umgebungstemperatur bis 130°C erfolgt und nach der Färbung in üblicher Weise gespült, ggfs. neutralisiert und anschließend nachbehandelt wird.

10. Kieselsäureglasfasern und daraus hergestellt Textilien nach Anspruch 9, dadurch gekennzeichnet, daß bei der Nachbehandlung ein wasserdampfdichter Überzug auf die Glasfasern aufgebracht worden ist.

11. Kieselsäureglasfasern und daraus hergestellte Textilien nach Anspruch 9 oder 10, dadurch gekennzeichnet, daß sie nach einem Verfahren gemäß einem oder mehreren der Ansprüche 1 bis 8 erhältlich sind.

**Claims**

1. Process for dyeing silica glass fibres or textiles produced therefrom with organic dyes by acid treatment of the sized or desized glass, dyeing and the simultaneous or subsequent application of a preferably water vapour-tight finish, characterised in that the acid treatment is carried on to a degree of extraction of from 0.1 to not more than 2%, preferably to a degree of extraction of 1%, and after intermediate drying with or without dry intermediate storage the dyeing is carried out with basic acrylic dyes having a K value of $\leqq$ 3.5 and a high light fastness at a pH of from 0 to 5 in the presence or absence of wetting agents and complexing agents with a liquor ratio of from 4:1 to 15:1 at a temperature ranging from ambient to 130°C, and then the dyeing is conventionally rinsed, optionally neutralised and subsequently aftertreated.

2. Process according to Claim 1, characterised in that when the dyeing is carried out in a different bath from the acid treatment it is carried out at a pH which corresponds to an aqueous acetic acid of from 0.5 to 2 g/l.

3. Process according to Claim 1 or 2, characterised in that the dyeing is carried out in a bath which is continuously heated in the course of from 15 to 60 min from the ambient temperature to from 50°C to close below the boiling point, maintained at that temperature for from 30 to 120 min, and then cooled back down to the ambient temperature in the course of from 15 to 60 min.

4. Process according to Claim 3, characterised in that the bath is continuously heated in the course of about 20-50 min from room temperature to 60-80°C, maintained at that temperature for about 45-90 min, and then cooled back down to 25-50°C in the course of from 15 to 30 min.

5. Process according to any one of Claims 1 to 4, characterised in that, if the process is carried out in two stages in a single bath, the auxiliaries are all added at the start and the dye is added when the dyeing temperature has been reached, with or without prior buffering of the liquor.

6. Process according to any one of Claims 1 to 5, characterised in that if acid-sensitive dyes are used the liquor is buffered back to pH 3-4 before the dye is added and/or the acid used, at any rate in the course of the dyeing, is acetic acid.

7. Process according to any one of the preceding claims, characterised in that, after the acid treatment, the treated material is washed substantially acid-free, optionally neutralised and then dried and subsequently, with or without intermediate storage, introduced into the dyebath.

8. Process according to any one of the preceding claims, characterised in that the aftertreatment utilises crosslinkable or polymerisable polymers or prepolymers which form a water vapour-tight coating on the fibre and a permanent residual water content of from 0.5 to 10%, in particular of from 0.5 to 3%, remains in the fibre.

9. Silica glass fibres or textiles produced therefrom which have been acid-treated, dyed with organic dyes and optionally finished or provided with a water vapour-tight coating, characterised in that they are obtainable by carrying on the acid treatment, optionally after prior desizing, to a degree of extraction of from 0.1 to not more than 2%, preferably to a degree of extraction of 1%, and after intermediate drying with or without dry intermediate storage dyeing with basic acrylic dyes having a K value of $\leqq$ 3.5 and a high light fastness at a pH of from 0 to 5 in the presence or absence of wetting agents and complexing agents with a liquor ratio of from 4:1 to 15:1 at a temperature ranging from ambient to 130°C, the dyeing being thereafter conventionally rinsed, optionally neutralised and subsequently aftertreated.

10. Silica glass fibres and textiles produced therefrom according to Claim 9, characterised in that a water vapour-tight coating has been applied to the glass fibres in the course of the aftertreatment.

11. Silica glass fibres and textiles produced therefrom according to Claim 9 or 10, characterised in that they are obtainable by a process according to one or more of Claims 1 to 8.

**Revendications**

1. Procédé de teinture de libres de verre de silice ou de textiles fabriqués à partir de celles-ci, avec des colorants organiques, par traitement à l'acide du verre éventuellement désencollé, teinture et éventuellement application subséquente d'un apprêt qui est de préférence étanche à la vapeur d'eau, caractérisé en ce que l'on effectue le traitement à l'acide jusqu'à un degré d'extraction de 0,1 à 2 % au plus, de préférence de 1 %, et après un séchage intermédiaire, éventuellement après un stockage intermédiaire à sec, on effectue la teinture avec des colorants acryliques basiques ayant une valeur K ≦ 3,5 et une grande solidité à la lumière, dans la plage de pH de 0 à 5, en ajoutant éventuellement un agent mouillant et un complexant, à un rapport de bain de 1:4 à 1:15, à une température comprise entre la température ambiante et 130°C, et après la teinture, on rince de façon usuelle, on neutralise éventuellement, et ensuite, on effectue un traitement complémentaire.

2. Procédé selon la revendication 1, caractérisé en ce que la teinture, si elle est effectuée dans un bain différent de celui du mordançage, est réalisée à un pH qui correspond à une solution aqueuse d'acide acétique de 0,5 à 2 g/l.

3. Procédé selon la revendication 1 ou 2, caractérisé en ce que la teinture se déroule dans un bain que l'on chauffe en continu de la température ambiante jusqu'à 50°C en l'espace de 15 à 60 minutes, juste au-dessous du point d'ébullition, on le maintient à cette température pendant 30 à 120 minutes et ensuite, on le refroidit à la température ambiante en l'espace de 15 à 60 minutes.

4. Procédé selon la revendication 3, caractérisé en ce qu'on chauffe le bain en continu, de la température ambiante à 60 à 80°C, en l'espace d'environ 20 à 50 minutes, on le maintient à cette température pendant environ 45 à 90 minutes et ensuite, on le refroidit à 25 à 50°C en l'espace de 15 à 30 minutes.

5. Procédé selon l'une des revendications 1 à 4, caractérisé en ce que, pour la mise en oeuvre du procédé à bain unique et à deux étapes, on ajoute, au départ, tous les adjuvants, et lorsque la température de teinture est atteinte, on ajoute le colorant, éventuellement après un tamponnage adéquat du bain.

6. Procédé selon l'une des revendications 1 à 5, caractérisé en ce que, lorsqu'on utilise des colorants sensibles aux acides, on ramène le bain à pH 3 - 4, par tamponnage, avant d'ajouter le colorant, et/ou on utilise, comme acide, de l'acide acétique, dans tous les cas pendant la teinture.

7. Procédé selon l'une des revendications précédentes, caractérisé en ce qu'après le traitement à l'acide, on lave le produit extrait jusqu'à ce qu'il soit amplement exempt d'acide, on le neutralise éventuellement, ensuite on le sèche, et ensuite, on l'introduit dans le bain de teinture, éventuellement après un stockage intermédiaire.

8. Procédé selon l'une des revendications précédentes, caractérisé en qu'on utilise, pour le traitement complémentaire, des polymères ou des prépolymères réticulables ou polymérisables, qui forment un revêtement étanche à la vapeur d'eau sur les fibres, et une teneur en eau résiduaire de 0,5 à 10 %, en particulier de 0,5 à 3 %, subsiste dans les fibres.

9. Fibres de verre de silice ou textiles fabriqués à partir de celles-ci, traitées à l'acide, teintes avec des colorants organiques et éventuellement apprêtées ou pourvues d'un revêtement étanche à la vapeur d'eau, caractérisées en ce qu'on les obtient en effectuant le traitement à l'acide, éventuellement après un désencollage, jusqu'à un degré d'extraction de 0,1 à 2 % au plus, de préférence de 1 %, et après un séchage intermédiaire, éventuellement après un stockage intermédiaire à sec, on effectue la teinture avec des colorants acryliques basiques ayant une valeur K ≦ 3,5 et une grande solidité à la lumière, dans la plage de pH de 0 à 5, en ajoutant éventuellement un agent mouillant et un complexant, à un rapport de bain de 1:4 à 1:15, à une température comprise entre la température ambiante et 130°C, et après la teinture, on rince de façon usuelle, on neutralise éventuellement, et ensuite, on effectue un traitement complémentaire.

10. Fibres de verre de silice et textiles fabriques à partir de celles-ci, selon la revendication 9, caractérisés en ce qu'on applique un revêtement étanche à la vapeur d'eau sur les fibres pendant le traitement complémentaire.

**11.** Fibres de verre de silice et textiles fabriqués à partir de celles-ci, selon la revendication 9 ou 10, caractérisés en ce qu'on les obtient d'après un procédé selon une ou plusieurs des revendications 1 à 8.